(19) Europäisches Patentamt
European Patent Office
Office européen des brevets

(11) **EP 1 882 232 B1**

(12) **EUROPÄISCHE PATENTSCHRIFT**

(45) Veröffentlichungstag und Bekanntmachung des Hinweises auf die Patenterteilung:
**23.03.2016   Patentblatt 2016/12**

(21) Anmeldenummer: **06753654.0**

(22) Anmeldetag: **11.05.2006**

(51) Int Cl.:
*G06K 9/00* *(2006.01)*    *G06T 5/00* *(2006.01)*

(86) Internationale Anmeldenummer:
**PCT/EP2006/004625**

(87) Internationale Veröffentlichungsnummer:
**WO 2006/122756 (23.11.2006 Gazette 2006/47)**

(54) **VERFAHREN UND VORRICHTUNG ZUM BESTIMMEN VON MATERIALGRENZEN EINES PRÜFOBJEKTS**

METHOD AND DEVICE FOR DETERMINING THE MATERIAL INTERFACES OF A TEST OBJECT

PROCEDE ET DISPOSITIF POUR DETERMINER DES DELIMITATIONS DE MATIERE D'UN OBJET A TESTER

(84) Benannte Vertragsstaaten:
**DE FR GB IT**

(30) Priorität: **17.05.2005   DE 102005023376**

(43) Veröffentlichungstag der Anmeldung:
**30.01.2008   Patentblatt 2008/05**

(73) Patentinhaber: **Carl Zeiss Industrielle Messtechnik GmbH**
**73447 Oberkochen (DE)**

(72) Erfinder:
• **LETTENBAUER, Hubert**
**73457 Essingen (DE)**
• **LOTZE, Andreas**
**01309 Dresden (DE)**
• **KUNZMANN, Steffen**
**01279 Dresden (DE)**

(74) Vertreter: **Patentanwälte Bressel und Partner mbB**
**Potsdamer Platz 10**
**10785 Berlin (DE)**

(56) Entgegenhaltungen:
US-A- 6 125 164     US-A1- 2001 055 016
US-A1- 2004 131 142     US-A1- 2004 141 581
US-B1- 6 631 364

• MONGA O ET AL: "RECURSIVE FILTERING AND EDGE TRACKING: TWO PRIMARY TOOLS FOR 3D EDGE DETECTION" IMAGE AND VISION COMPUTING, GUILDFORD, GB, Bd. 9, Nr. 4, August 1991 (1991-08), Seiten 203-214, XP007901019 ISSN: 0262-8856
• LEITNER F ET AL: "COMPLEX TOPOLOGY 3D-OBJECTS SEGMENTATION" PROCEEDINGS OF THE SPIE, SPIE, BELLINGHAM, VA, US, Bd. 1609, 1991, Seiten 16-26, XP007901025 ISSN: 0277-786X
• COHEN I ET AL: "USING DEFORMABLE SURFACES TO SEGMENT 3-D IMAGES AND INFER DIFFERENTIAL STRUCTURES" CVGIP IMAGE UNDERSTANDING, ACADEMIC PRESS, DULUTH, MA, US, Bd. 56, Nr. 2, 1. September 1992 (1992-09-01), Seiten 242-263, XP000342533 ISSN: 1049-9660
• EINAR HEIBERG: "AUTOMATED FEATURE DETECTION IN MULTIDIMENSIONAL IMAGES" DISSERTATION, XX, XX, Dezember 2004 (2004-12), Seiten I-X,1, XP007901020
• MONGA O ET AL: "3D EDGE DETECTION USING RECURSIVE FILTERING: APPLICATION TO SCANNER IMAGES" CVGIP IMAGE UNDERSTANDING, ACADEMIC PRESS, DULUTH, MA, US, Bd. 53, Nr. 1, Januar 1991 (1991-01), Seiten 76-87, XP000173953 ISSN: 1049-9660

EP 1 882 232 B1

• SZEKELY G ET AL: "SEGMENTATION OF 3D OBJECTS FROM MRI VOLUME DATA USING CONSTRAINED ELASTIC DEFORMATIONS OF FLEXIBLE FOURIER SURFACE MODELS" INTERNET CITATION, XX, XX, 3. April 1995 (1995-04-03), XP007901021

**Beschreibung**

Die Erfindung betrifft ein Verfahren und eine Vorrichtung zum Bestimmen von Materialgrenzen eines Prüfobjekts. Die Erfindung kann mit Vorteil auf dem Gebiet der Qualitätskontrolle von industriell hergestellten Gegenständen, insbesondere bei der Serienfertigung angewendet bzw. eingesetzt werden. Besonders vorteilhaft ist ihre Anwendung bei der Untersuchung von Bauteilen mit komplexen Geometrien. Insbesondere können Fehler im Material (wie z. B. unerwünschte Hohlräume oder Einschlüsse aus einem anderen Material) oder unerwünschte Abweichungen von einer vorgegebenen Form eines Materialbereichs erkannt werden. Ein besonderes Anliegen der Qualitätskontrolle von industriell gefertigten Objekten ist die Prüfung, ob Abmessungen des Prüfobjekts mit Vorgaben der Fertigung übereinstimmen.

Die Computertomografie (CT) eignet sich dazu, innere Strukturen eines Prüfobjekts festzustellen. CT ist vor allem aus der Medizin bekannt, wird jedoch auch zur Vermessung von nicht lebender Materie eingesetzt. Es ist bekannt, mittels CT (räumlich) dreidimensionale Bilddaten zu erzeugen, die wie zum Beispiel wie aus DE 102 45 116 A1 oder aus DE 102 48 770 A1 bekannt rekonstruierte Bilddaten sind. Bei der Rekonstruktion werden dreidimensionale Bilddaten aus einer Vielzahl von zweidimensionalen Bildern gewonnen, die wiederum unter Drehung des Prüfobjekts relativ zu einer Strählungsquelle und einem Strahlungsdetektor gewonnen werden. Derartige bekannte Verfahren und Vorrichtungen können auch im Zusammenhang mit der Erfindung für die Erzeugung der dreidimensionalen Bilddaten angewendet bzw. verwendet werden. Die Erfindung ist jedoch nicht darauf beschränkt.

Aus US 2001/0055016 A1 ist ein System zur Erzeugung eines dreidimensionalen Bildes bekannt, das einen Bildselektor zur Bestimmung von Bildelementen (Voxel) aufweist, die einer Grenze in dem dreidimensionalen Bild entsprechen. Der Bildselektor reagiert auf Eingaben eines Benutzers. Er bestimmt die Grenze aus Voxeln, die eine Opakität größer als ein vorgegebener Schwellwert aufweisen, oder bestimmt die Grenze aus Voxeln, die einen Opakität-Gradienten größer als ein vorgegebener Schwellwert aufweisen. Das System soll für medizinische Zwecke eingesetzt werden.

XP007901019, Recursive filtering and edge tracking: two primary tools for 3D edge detection, von Oliver Monga et al. beschreibt ein Verfahren, das zwei Hauptschritte aufweist: Eine 3D-Kantendetektion durch Filterung und ein 3D-Kanten-Verfolgen, unter Verwendung morphologischer Eigenschaften. Aus den Bilddaten werden Extrema von lokalen Gradienten in der Gradientenrichtung extrahiert. Das Prinzip dieses Verfahrens ist, entlang der Normalen der Kontur zu verfahren (angenähert durch die Richtung des Gradienten) und Punkte zu selektieren, die die höchste Gradientengröße haben. Infolge von Rauschen können viele lokale Gradientenextrema nicht wahren Kantenpunkten entsprechen. Es wird ein bekanntes Hysterese-Grenzwertverfahren auf 3D erweitert. Das Prinzip des Hysterese-Grenzwertverfahrens ist unter allen Extrema, die eine höhere Gradientengröße als ein niedriger Grenzwert haben, diese auszuwählen, so dass ein verbundener Pfad von Extrema existiert, dessen Gradientengröße höher als der untere Grenzwert ist, zwischen dem beteiligten Punkt und einem Extremum, dessen Gradientengröße höher als obere Grenzwert ist.

XP007901025, "Complex topology 3D-objects segmentation" von F. Leitner et at. sowie die Veröffentlichung XP008096010, "From splines and snakes to Snake-Splines", von denselben Autoren betreffen das Segmentieren von komplexen medizinischen 3D-Objekten aus Sätzen von parallelen Schnittbildern. Die Grenze eines 3D-Objekts ist eine Oberfläche, die mit Hilfe von parametrisierten Spline-Funktionen repräsentiert wird. Im Gegensatz zu klassischen Splines, die dazu verwendet werden, eine gegebene Funktion zu repräsentieren und nicht dazu gedacht sind, sich mit der Zeit zu entwickeln, sind so genannte Snake-Splines dazu gedacht, sich fortschreitend gegen eine à priori unbekannte Form zu bewegen. Es wird eine dynamische Konstruktion von Snake-Splines beschrieben. Es wird erwähnt, dass ä priori-Kenntnisse in Form eines CAD-Modells des Objekts, welches segmentiert werden soll, eingegeben werden können. Das Modell soll zunächst ohne Modifikation an das reale Bild angepasst werden. Dann kann die Vorgehensweise unter Verwendung von Snake-Splines angewendet werden. Das Verfahren kommt ohne klassische Gradienten aus.

XP00342533, "Using deformable surfaces to segment 3D images and infer differential structures", von Isaac Cohen et al. betrifft ein 3D-Modell, welches verformbar ist, um 3D-Bilder zu segmentieren. Das Modell dient als grobe Vorausschätzung der Oberfläche. Für eine Kontur wird die Bedingung aufgestellt, wonach die Ableitung des Gradienten in Richtung der Normalen gleich 0 sein soll. Daraus wird für die gesamte Oberfläche eine Integralgleichung zur Bestimmung der so genannten Energie aufgestellt, diese Energie kann nun als Kriterium zum Anpassen des verformbaren Modells verwendet werden.

XP007901020, "Automated feature detection in multidimensional images" von Einar Heiberg beschreibt eine Gleichung zur Minimierung der Energie. Dabei wird zwischen verschiedenartigen Kräften unterschieden, nämlich bildabhängigen Kräften, wie Ballonkräften und Kantenkräften, internen Kräften, wie Krümmung, Schnittflächenkräften, Beschleunigung und Dämpfung, und Benutzer-Interaktionskräften. Es werden verschiedene Arten von Kräften für jeden Knotenpunkt berechnet und summiert.

US 6,631,364 B1 beschreibt ein Verfahren zum Suchen und Charakterisieren von 3D-Bildern. Es wird ein Verfahren zum schnellen Suchen durch eine Mehrzahl von dreidimensionalen Objektmodellen beschrieben. Es werden Deskriptoren zur Charakterisierung bestimmt und eine Objektmodelldatenbank wird durchsucht, um auf Basis der Charakteristik-Deskriptoren eine Übereinstimmung zu finden. Die Deskriptoren basieren auf Charakteristiken, wie Skalierung, Farbe und Geometrie und einem Objektmodell für Dreiecke. Jedes Dreieck wird durch einen Punkt und ein Gewicht repräsentiert. Der Punkt ist im Massezentrum des Dreiecks, das Gewicht ist gleich der Fläche des Dreiecks.

In dreidimensionalen Bilddaten von industriell hergestellten Objekten treten spezielle Artefakte auf, die insbesondere auf benachbarte Materialbereiche aus verschiedenen Materialien, auf das Vorhandensein von ebenen Grenzflächen von Materialbereichen und auf gerade, scharfe Kanten von Materialbereichen zurückzuführen sind. Diese Artefakte entstehen bei der Rekonstruktion der Bildwerte aus zweidimensionalen Bildern, die aus unterschiedlichen Richtungen aufgenommen wurden. Die Artefakte sind z. B.:

- verschiedene Bildwerte in Bereichen aus demselben Material, sodass die Bereiche scheinbar andere Materialeigenschaften aufweisen und benachbarte Bereiche aus demselben Material scheinbar eine Materialgrenze zwischen sich aufweisen,

- Streifen, d. h. schlierenförmige Bereiche mit fälschlich veränderten Bildwerten innerhalb von oder am Rand von einem Bereich aus einem homogenen Material.

Bei der Verwendung von festen Schwellwerten können diese Artefakte zu Fehlern bei der Grenz-Bestimmung führen. Es werden Materialgrenzen bestimmt, die nicht tatsächlich vorhanden sind und/oder um einen signifikanten Fehlerbetrag gegen die wahre Position der Materialgrenze versetzt sind.

Es ist eine Aufgabe der vorliegenden Erfindung, ein Verfahren und eine Vorrichtung der eingangs genannten Art anzugeben, die eine präzise Bestimmung einer Materialgrenze insbesondere bei industriell hergestellten Gegenständen erlauben. Die beigefügten Patentansprüche definieren den Schutzbereich.

Zur Lösung wird vorgeschlagen, Materialgrenzen individuell zu untersuchen. Dabei werden insbesondere Änderungen der Bildwerte im Bereich der Materialgrenze betrachtet. Insbesondere um die Auswertung hinsichtlich ihres Aufwandes (z. B. Computer-Rechenzeit) zu vereinfachen, wird eine Auswertungslinie festgelegt und entlang der Auswertungslinie liegende Bildwerte zur Materialgrenzen-Bestimmung verwendet.

Insbesondere wird ein Verfahren zum Bestimmen von Materialgrenzen eines Prüfobjekts vorgeschlagen, wobei

- dreidimensionale Bilddaten des Prüfobjekts erzeugt werden oder dreidimensionale Bilddaten des Prüfobjekts vorliegen, wobei Bildwerte der Bilddaten mittels invasiver Strahlung gewonnen werden oder wurden,
- eine Auswertungslinie zur Auswertung der Bilddaten relativ zu dem Prüfobjekt festgelegt wird, und
- durch Auswertung von Bildwerten, die entlang der Auswertungslinie liegen, ein Ort einer Materialgrenze des Prüfobjekts bestimmt wird, sodass der Betrag der ersten partiellen Ableitung der Bildwerte in Richtung der Auswertungslinie an dem Ort der Materialgrenze ein lokales Maximum aufweist.

Auf diese Weise kann der Ort mit der größten Änderung der Bildwerte in Richtung der Auswertungslinie als der Ort der Materialgrenze bestimmt werden. Dem liegt die Erkenntnis zugrunde, dass die größte Änderung bzw. das Maximum der partiellen Ableitung trotz der oben genannten Artefakte in der Regel am tatsächlichen Ort der Materialgrenze liegt.

Wird dagegen ein fester Schwellwert des Absorptionsgrades für invasive Strahlung als Kriterium verwendet, kann auch der z. B. neben einer Materialgrenze liegende Bereich einer Schliere unter dieses Kriterium fallen. Wird ein fester Schwellwert des Gradienten des Absorptionsgrades als Kriterium verwendet, muss der Schwellwert klein genug gewählt werden, um alle denkbaren Materialgrenzen zu erkennen. Beispielsweise können an einer Materialgrenze zwei Materialien aneinander angrenzen, die einen verhältnismäßig geringen Absorptionsgrad-Unterschied aufweisen. Im Fall einer Schliere an einer Materialgrenze werden daher u. U. zwei Materialgrenzen erkannt.

Bei der erfindungsgemäßen Lösung wird dagegen der Ort mit dem größten Wert der partiellen Ableitung als Ort der Materialgrenze bestimmt. Insbesondere kann hierzu ein Ortsbereich definiert werden, der sich in Richtung der Auswertungslinie erstreckt. Liegen in dem Ortsbereich mehrere lokale Maxima der ersten partiellen Ableitung, wird der Ort mit dem größten Maximum als Ort der Materialgrenze bestimmt. Der Ortsbereich entspricht dabei z. B. einem Abschnitt der Auswertungslinie. Der Ortsbereich kann daher in diesem Fall durch Vorgabe einer Länge des Abschnitts definiert werden. Insbesondere wenn Informationen über den Sollzustand des Prüfobjekts verwendet werden (hierauf wird noch näher eingegangen), kann die Länge des Abschnitts so kurz gewählt werden, dass sie nur geringfügig größer als der maximal erwartete Lagefehler von Materialgrenzen des Objekts ist. Somit kann die Materialgrenzen-Bestimmung gezielt auf einen erwarteten Bereich beschränkt werden. Z. B. kann die Länge des Abschnitts 100 oder weniger als 100, vorzugsweise 50 oder weniger als 50 Längeneinheiten betragen, wobei eine Längeneinheit als Kehrwert der örtlichen Auflösung der Bilddaten definiert ist. Eine Längeneinheit ist je nach Auflösung z. B. ein Wert im Bereich 0,02 $\mu$m bis 0,05 mm.

Alternativ oder zusätzlich zu der Verwendung eines Ortsbereiches, in dem ein absolutes Maximum als Kriterium verwendet wird, wird bei einer Ausgestaltung des Verfahrens ein Ort nur dann als Ort einer Materialgrenze erkannt, wenn der Betrag der ersten partiellen Ableitung der Bildwerte in Richtung der Auswertungslinie einen festgelegten Schwellwert (Grenzwert) überschreitet oder größer oder gleich dem Schwellwert ist. Auch dadurch kann die fälschliche Erkennung von Materialgrenzen auf Grund von Schlieren oder auf Grund von anderen Schwankungen der Bildwerte vermieden werden.

Insbesondere weisen die Bilddaten Bitdwerte auf, die Informationen über zumindest eine Materialeigenschaft des Prüfobjekts enthalten, etwa ein Absorptionsvermögen des Materials für die verwendete invasive Strahlung und/oder eine Dichte des Materials. Die dreidimensionalen Bilddaten können auch Bildwerte aufweisen, die Informationen über eine entsprechende Materialeigenschaft eines zweiten Materials (und etwaiger weiterer Materialien) des Prüfobjekts enthalten und/oder über etwaige Hohlräume oder Aussparungen. Unter "Material" wird daher auch Luft, ein anderes Gas oder ein Vakuum in dem Prüfobjekt verstanden.

Die Bildwerte sind in der Regel einer absoluten Position oder einer relativen Position eines Ortes oder Volumenbereichs zugeordnet oder können derart zugeordnet werden. Allgemeiner formuliert stehen die verschiedenen Bildwerte räumlich miteinander in einer Beziehung, die der tatsächlichen räumlichen Beziehung der Teilbereiche des Prüfobjekts entsprechen. Insbesondere können die Bilddaten, wie z. B. aus DE 102 48 770 A1 bekannt, diskrete Volumenelemente (Voxel) aufweisen, denen die zumindest eine Materialeigenschaft oder ein daraus abgeleiteten Wert als Bildwert zugeordnet ist.

Bei der invasiven Strahlung handelt es sich insbesondere um Röntgenstrahlung, die für die Untersuchung von industriell gefertigten Messeobjekten, insbesondere eine Untersuchung im Rahmen eines Qualitätssicherungsschrittes einer Serienfertigung der Objekte, besonders vorteilhaft ist, da sie bei einer Vielzahl von Materialien eine hohe Eindringtiefe hat. Es können jedoch auch andere invasive Strahlungsarten wie z. B. Positronenstrahlung und/oder Elektronenstrahlung verwendet werden. Auch die bei einer Magnetresonanzmessung verwendeten Felder und Signale werden unter dem Begriff "invasive Strahlung" verstanden.

Vorzugsweise dient als primäre Messgröße die Intensität (Strahlungsflussdichte) der Strahlung, die nach einem Hindurchtreten durch das Prüfobjekts noch vorhanden ist. Hierdurch kann die Absorption oder Extinktion der Strahlung ermittelt werden. Es können jedoch alternativ oder zusätzlich auch andere Effekte wie Beugung und/oder Reflexion von Strahlung an Materialgrenzen genutzt werden, um die dreidimensionalen Bilddaten zu erzeugen.

Die Auswertungslinie zur Auswertung der Bilddaten wird relativ zu dem Prüfobjekt festgelegt. Darunter ist auch zu verstehen, dass die Position und Orientierung des Prüfobjekts relativ zu einem Koordinatensystem bekannt ist und die Auswertungslinie bezüglich des Koordinatensystems festgelegt wird.

Insbesondere werden Position und Orientierung der Auswertungslinie bezüglich des Prüfobjekts festgelegt. Dabei müssen die Position und die Orientierung nicht explizit angegeben werden. Vielmehr reicht auch eine äquivalente Definition, wie z. B. die Angabe einer Ebene, zu der die Auswertungslinie senkrecht steht, und die Angabe eines Punktes der Ebene, an dem die Auswertungslinie die Ebene durchstößt.

Unter Bildwerten, die entlang der Auswertungslinie liegen, werden nicht nur Bildwerte verstanden, deren zugehöriger Ort unmittelbar auf der Auswertungslinie liegt bzw. deren zugehöriger Volumenbereich (z. B. Voxel sind einem Volumenbereich zugeordnet) von der Auswertungslinie durchstoßen wird. Es können zumindest optional auch Bildwerte berücksichtigt werden, deren zugehöriger Ort oder Volumenbereich in einem Abstand zu der Auswertungslinie liegt. Insbesondere wird bei einer bevorzugten Ausführungsform des Verfahrens bei der Auswertung der Bildwerte, die entlang der Auswertungslinie liegen, eine Gewichtung von Bildwerten in Abhängigkeit von einem Abstand der Bildwerte zu der Auswertungslinie durchgeführt. Dies wird insbesondere dadurch erreicht, dass beispielsweise durch Interpolation von Bildwerten ein kontinuierlicher (nicht mehr ortsdiskreter) Verlauf der Bildwerte quer zur Auswertungslinie ermittelt wird. So kann berücksichtigt werden, dass die Auswertungslinie (insbesondere bei einem gegen die Achsen des Koordinatensystems der Bilddaten geneigten Verlauf) näher an oder ferner von den zugeordneten Orten von Bildwerten verläuft bzw. Volumenbereiche nicht mittig durchstößt.

Für die Ermittlung des Ortes einer Materialgrenze wurde erfindungsgemäß die Bedingung aufgestellt, dass der Betrag der ersten partiellen Ableitung der Bildwerte in Richtung der Auswertungslinie an dem Ort der Materialgrenze ein lokales Maximum aufweist. Dies bedeutet jedoch nicht, dass bei der Ausführung des Verfahrens zwangsläufig die erste partielle Ableitung berechnet werden muss. Vielmehr kann auch ein äquivalentes Kriterium verwendet werden, z. B. dass die zweite partielle Ableitung in Richtung der Auswertungslinie Null ist (Wendepunktkriterium) oder es können z. B. bei orts-diskreten Bilddaten (etwa Voxeln) unmittelbar die Unterschiede der Bildwerte ausgewertet werden. Der größte Unterschied eines Bildwertes im Vergleich zu seinen in Richtung der Auswertungslinie gelegenen Nachbarn entspricht einem Betragsmaximum der ersten partiellen Ableitung. Dabei kann nicht nur der Unterschied zwischen unmittelbaren Nachbarn betrachtet werden, sondern können beispielsweise auch für jeden Bildwert die Unterschiede innerhalb eines örtlichen Bereiches der Größe von n Abständen zwischen unmittelbaren Nachbarn bzw. n Kantenlängen eines Voxels betrachtet werden, wobei n eine ganze Zahl größer als 1 ist.

Insbesondere weisen die dreidimensionalen Bilddaten Informationen über eine innere Struktur des Prüfobjekts auf. Dabei umfasst der Begriff "innere" Struktur jede Grenzstruktur, die durch einen oder mehrere Materialbereiche des Prüfobjekts gebildet wird, einschließlich der äußeren Oberfläche des Prüfobjekts. Die innere Struktur weist in dem zuletzt genannten Fall z. B. einen Materialbereich aus einem einzigen Material auf, in den die invasive Strahlung eindringt.

Insbesondere kann die invasive Strahlung genutzt werden, die Form und Lage von Rändern und/oder Oberflächen des Materials oder der Materialien des Prüfobjekts zu bestimmen. Unter Rändern und Oberflächen werden äußere und innere Grenzen des Materials oder der Materialien verstanden. Umgekehrt liegt an einer Grenze des Materials z. B. eine Außenoberfläche, eine innere Oberfläche (beispielsweise an einem Hohlraum) oder ein Materialübergang zu einem anderen Material des Prüfobjekts vor.Die Auswertungslinie wird derart festgelegt, dass sie durch einen Punkt auf einer erwarteten Grenzfläche des Materials verläuft und eine Richtung aufweist, die an dem Punkt senkrecht zu der erwarteten Grenzfläche steht. Der Punkt und die erwartete Grenzfläche werden aus Informationen über einen Sollzustand des Prüfobjekts, nämlich aus CAD (Computer Aided Design) -Daten des Prüfobjekts, ermittelt. Informationen über einen Sollzustand des

Prüfobjekts liegen bei industriell hergestellten Objekten in der Regel ohnehin vor. Insbesondere wenn der Sollzustand mit dem Istzustand zu vergleichen ist, kann die Information über die erwartete Lage des Punktes auch zur Bestimmung des Fehlers verwendet werden, wenn der Punkt bzw. die Grenzfläche von dem Sollzustand abweicht.

Die Verwendung von Informationen über den Sollzustand hat darüber hinaus den Vorteil, dass lediglich ein eingegrenzter Bereich der dreidimensionalen Bilddaten ausgewertet werden muss. Beispielsweise wird für eine Mehrzahl von Bereichen des Prüfobjekts jeweils zumindest ein Punkt auf einer erwarteten Grenzfläche ermittelt, für den dann jeweils eine Auswertungslinie festgelegt wird. Eine vollständige Ermittlung des Verlaufs der Grenzfläche ist für eine Qualitätskontrolle nicht erforderlich.

Die Verwendung von Informationen über den Sollzustand hat außerdem den Vorteil, dass Bereiche mit Schlieren oder mit Bildwert-Änderungen, in denen keine Materialgrenzen erwartet werden, außer Betracht gelassen werden können. Es werden daher anders als bei einer systematischen Auswertung ohne Vorkenntnisse über das Prüfobjekt keine "Phantom"-Materialgrenzen bestimmt.

Dadurch dass die Auswertungslinie senkrecht zu der erwarteten Grenzfläche verläuft, können besonders hohe Werte der ersten partiellen Ableitung der Bildwerte erwartet werden. In der Regel sind die Unterschiede der ersten partiellen Ableitung in Richtung der Auswertungslinie daher besonders groß. Dies erhöht die Zuverlässigkeit der Bestimmung des Ortes der Materialgrenze.

Insbesondere um die Wirkung von statistischen Schwankungen und anderer Ursachen von Rauschen auf das Auswertungsergebnis zu reduzieren, können bei der Gewinnung der Bildwerte Unterschiede zwischen örtlich benachbarten Bildwerten teilweise ausgeglichen oder teilweise verhindert werden, insbesondere durch digitale Filterung. Geeignete Filterungsverfahren sind an sich bekannt und werden beispielsweise in der DE 102 48 770 A1, die hiermit vollinhaltlich durch Referenzierung aufgenommen wird, beschrieben. Unter "teilweise" wird verstanden, dass die Unterschiede selbstverständlich nicht vollständig ausgeglichen werden, da ansonsten die Information für die Bestimmung der Materialgrenze beseitigt würde. Alternativ oder zusätzlich kann das Rauschen bei der Auswertung der entlang der Auswertungslinie liegenden Bildwerte eliminiert oder verringert werden. Insbesondere können Unterschiede örtlich benachbarter Bildwerte, die entlang der Auswertungslinie liegen, und/oder Unterschiede von Werten, die aus den entlang der Auswertungslinie liegenden Bildwerten abgeleitet werden, vor oder bei der Bestimmung des Ortes der Materialgrenze teilweise ausgeglichen werden, insbesondere durch digitale Filterung. Hierzu eignet sich beispielsweise ein Gaußsches Filter, das gleitend in Richtung der Auswertungslinie angewendet wird. Die Filterung bei der Auswertung der entlang der Auswertungslinie liegenden Bildwerte hat den Vorteil, dass der Filterungsprozess nur für den jeweiligen Auswertungsbereich und außerdem lediglich linear, in Richtung der Auswertungslinie durchgeführt werden muss. Es kann daher bei Verwendung eines Computers Rechenzeit bzw. Rechenleistung gespart werden.

Trotz einer Filterung können noch Unterschiede zwischen benachbarten Bildwerten bestehen, die zu einem lokalen Maximum der ersten partiellen Ableitung in Richtung der Auswertungslinie führen, wobei jedoch an dem Ort des lokalen Maximums keine Materialgrenze vorliegt. Ein Grund hierfür sind Schwankungen der Materialeigenschaften und/oder Inhomogenitäten innerhalb eines Bereichs, der aus demselben Material gefertigt wurde. Insbesondere aus diesem Grund wird bevorzugt, dass ein Ort nur dann als Ort einer Materialgrenze erkannt wird, wenn der Betrag der ersten partiellen Ableitung der Bildwerte in Richtung der Auswertungslinie einen festgelegten Grenzwert überschreitet oder größer oder gleich dem Grenzwert ist. Dabei muss nicht der Grenzwert der partiellen Ableitung verwendet werden. Vielmehr können auch äquivalente Grenzwerte verwendet werden. Z. B. kann es, abhängig von der konkreten Vorgehensweise zur Ermittlung des Ortes der Materialgrenze, ausreichen, wenn ein äquivalenter Grenzwert für einen Unterschied zwischen benachbarten Bildwerten festgelegt wird und der Abstand der zugeordneten Orte der Bildwerte gegeben ist.

Besonders bevorzugt wird eine Ausgestaltung des Verfahren, wobei zumindest ein erster Ort der Materialgrenze gemäß dem zuvor beschriebenen Verfahren bestimmt wird, wobei eine Mehrzahl weiterer Orte an einer Grenzfläche derselben Materialgrenze bestimmt wird, wobei ermittelt wird, ob die Auswertungslinie an dem ersten Ort senkrecht zu der durch zumindest die weiteren Orte definierten Grenzfläche verläuft, und/oder ein Maß der Abweichung der Auswertungslinie von der Senkrechten ermittelt wird. Auf diese Weise kann ein Fehler der Bestimmung des ersten Ortes ermittelt werden und/oder korrigiert werden. Insbesondere ist es möglich, mit einer geänderten Auswertungslinie, die in Richtung der Senkrechten verläuft, die Bestimmung des ersten Ortes zu wiederholen. Auch kann diese Vorgehensweise der Überprüfung und erneuten Bestimmung mehrmals wiederholt werden.

Der Überprüfung der Richtung der Auswertungslinie liegt der Gedanke zugrunde, dass das Maximum der ersten partiellen Ableitung in Richtung der Auswertungslinie von dem Winkel abhängt (proportional zum Kosinus des Winkels der Auswertungslinie zur Senkrechten ist) unter dem die Auswertungslinie die Grenzfläche durchstößt. Bei sehr großen Winkeln gegen die Senkrechte kann es dazu kommen, dass die Materialgrenze nicht erkannt wird und/oder als normale Schwankung der Bildwerte betrachtet wird.

Die weiteren Orte, die vorzugsweise dem ersten Ort benachbart sind, können beispielsweise zumindest teilweise wiederum unter Verwendung einer Auswertungslinie bestimmt werden. Alternativ oder zusätzlich können solche weiteren Orte auf der Grenzfläche zum Beispiel dadurch bestimmt werden, dass sie (insbesondere innerhalb eines Toleranzbereichs) denselben Bildwert wie der Bildwert des ersten Ortes haben.

Ferner gehört zum Umfang der Erfindung ein Computerprogramm, das bei Ablauf auf einem Computer oder Computer-Netzwerk das erfindungsgemäße Verfahren in einer seiner Ausgestaltungen ausführt. Die dreidimensionalen Bilddaten sind insbesondere in einem Permanentspeicher des Computers oder des Computer-Netzwerks gespeichert und/oder werden über eine Schnittstelle dem Permanentspeicher zugeführt. Der Computer oder das Computer-Netzwerk können auch zur Erzeugung der dreidimensionalen Bilddaten (etwa durch die so genannte Rückprojektion bei einer CT) verwendet werden.

Weiterhin gehört zum Umfang der Erfindung ein Computerprogramm mit Programmcode-Mitteln, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger gespeichert sein.

Außerdem gehört zum Umfang der Erfindung ein Datenträger, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Auch gehört zum Umfang der Erfindung ein Computerprogramm-Produkt mit auf einem maschinenlesbaren Träger gespeicherten Programmcode-Mitteln, um das erfindungsgemäße Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Ferner wird eine Vorrichtung zum Bestimmen von Materialgrenzen eines Prüfobjekts vorgeschlagen, die Folgendes aufweist:

- eine Schnittstelle zum Empfangen von dreidimensionalen Bilddaten des Prüfobjekts, wobei Bildwerte der Bilddaten mittels invasiver Strahlung gewonnen wurden,
- eine Festlegungseinrichtung zur Festlegung einer Auswertungslinie relativ zu dem Prüfobjekt, und
- eine Auswertungseinrichtung, die mit der Schnittstelle und der Festlegungseinrichtung verbunden ist, wobei die Auswertungseinrichtung ausgestaltet ist, durch Auswertung von Bildwerten, die entlang der Auswertungslinie liegen, einen Ort einer Materialgrenze des Prüfobjekts zu bestimmen, sodass der Betrag der ersten partiellen Ableitung der Bildwerte in Richtung der Auswertungslinie an dem Ort der Materialgrenze ein lokales Maximum aufweist.

Die Festlegungseinrichtung und die Auswertungseinrichtung können insbesondere in Software implementiert sein, die dazu ausgestaltet ist, die dreidimensionalen Bilddaten auszuwerten. Es sind jedoch auch Realisierungen durch Hardware (z. B. mit speziell ausgestalteten mikroelektronischen Bauteilen) oder Kombinationen aus Hardware und Software möglich.

Im Folgenden wird die Erfindung anhand von Ausführungsbeispielen näher erläutert, die in den Figuren schematisch dargestellt sind. Die Erfindung ist jedoch nicht auf die Beispiele beschränkt. Im Einzelnen zeigen:

Fig. 1   eine Strichzeichnung zur schematischen Darstellung eines zweidimensionalen ebenen Schnittes, der aus einem Satz dreidimensionaler Bilddaten von einem Prüfobjekt erzeugt wurde,

Fig. 2   die Schnittdarstellung gemäß Fig. 1 mit einer Mehrzahl von Auswertungslinien,

Fig. 3   ein Flussdiagramm zur Erläuterung von Verfahrensschritten einer besonders bevorzugten Ausführungsform des erfindungsgemäßen Verfahrens,

Fig. 4   eine Volumeneinheit zur Darstellung der Gewichtung von entlang der Auswertungslinie liegenden Bildwerten,

Fig. 5   eine vereinfachte, zweidimensionale Darstellung zur Erläuterung, wie Punkte auf der Auswertungslinie ermittelt werden,

Fig. 6   ein Diagramm mit Bildwerten als Funktion des Ortes auf der Auswertungslinie und

Fig. 7   eine schematische Darstellung einer Vorrichtung zur Bestimmung von Materialgrenzen.

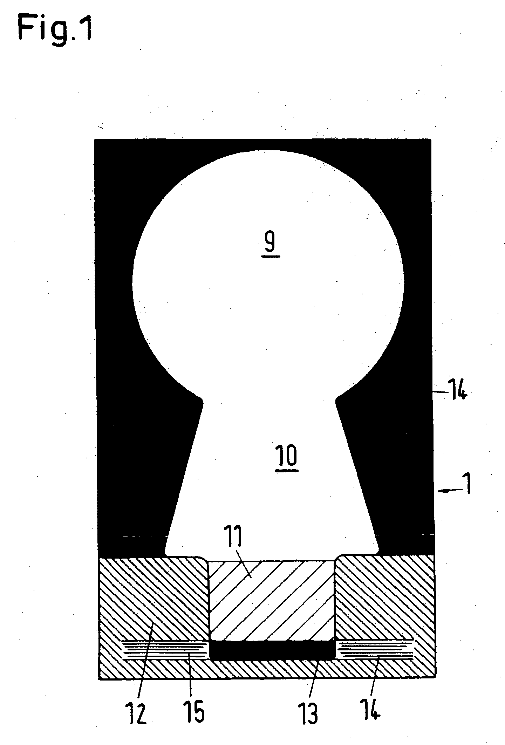

Das in Fig. 1 gezeigte Bild von einem Prüfobjekt 1 ist rechteckförmig. In der Praxis werden für derartige Bilder Grauwertdarstellung verwendet. Dabei sind die Bereiche umso dunkler je weniger Strahlung sie absorbiert haben. Jedoch treten Artefakte auf, die hier näher erläutert werden sollen.

Die dunklen, nahezu schwarzen Bereiche in Fig. 1 entsprechen Luft, die während der Aufnahme der Bildinformationen das eigentliche Prüfobjekt 1 umgeben hat. Das Prüfobjekt 1 besteht aus einem Kegelstumpf 10 mit einem darüber angeordneten kugelförmigen Kopf 9. Kegelstumpf und Kopf bilden die Umrisse einer üblichen Spielfigur für ein Brettspiel. Aus demselben Material wie der Kegelstumpf 10 und der Kopf 9 ist jedoch auch ein Fußteil 11 gefertigt, das sich ausgehend von dem Kegelstumpf 10 nach unten erstreckt. Zwischen dem Kegelstumpf 10 und dem Fußteil 11 besteht keine Materialgrenze, wie es nach Fig. 1 scheinbar der Fall ist. Tatsächlich bestehen jedoch Materialgrenzen des Fußteils 11 nach unten zu einer schwarz dargestellten Luftschicht 13, die sich unterhalb des Fußteils 11 an dessen gesamter Grundfläche entlang erstreckt und nach rechts und nach links jeweils zu einer Bodenplatte 12 aus einem anderen Material. Die Materialgrenzen des Fußteils 11 nach rechts und nach links sind jeweils durch eine sich vertikal nach oben erstreckende Grenzlinie erkennbar. Die Bodenplatte 12 nimmt das Fußteil 11 vollständig in einer entsprechend geformten Ausnehmung auf. Die Bodenplatte 12 hat in der Schnittdarstellung eine etwa rechteckige Außenkontur.

Das in Fig. 1 durch eine Strichzeichnung dargestellte Schnittbild wurde aus Computertomogramm-Bilddaten erzeugt. Das originale Schnittbild war ein Graustufenbild. Bei der CT-Aufnahme wurde das Prüfobjekt von etwa horizontal verlaufender Strahlung durchstrahlt. Dabei wurde das Prüfobjekt um eine in vertikaler Richtung verlaufende Achse gedreht. Daher wurden Informationen über das Fußteil 11 lediglich mittels Strahlung erhalten, die in demselben Strahlengang auch die Bodenplatte 12 durchdrang. Als Folge erhielt man die erhöhten Grauwerte (wie durch eine Schraffur angedeutet) für das Fußteil 11, obwohl das Fußteil 11 pro Volumeneinheit genauso viel Strahlung absorbierte wie der Kegelstumpf 10 und der Kopf 9. Außerdem bildeten sich seitlich rechts und links von der Luftschicht 13 Schlieren 14, 15, die in dem Graustufenbild, das der Fig. 1 entspricht, heller erscheinen als ihre Umgebung. Die Schlieren erstrecken sich streifenförmig in der gleichen Höhenposition wie die Luftschicht 13. Sie sind in Fig. 1 durch Striche angedeutet.

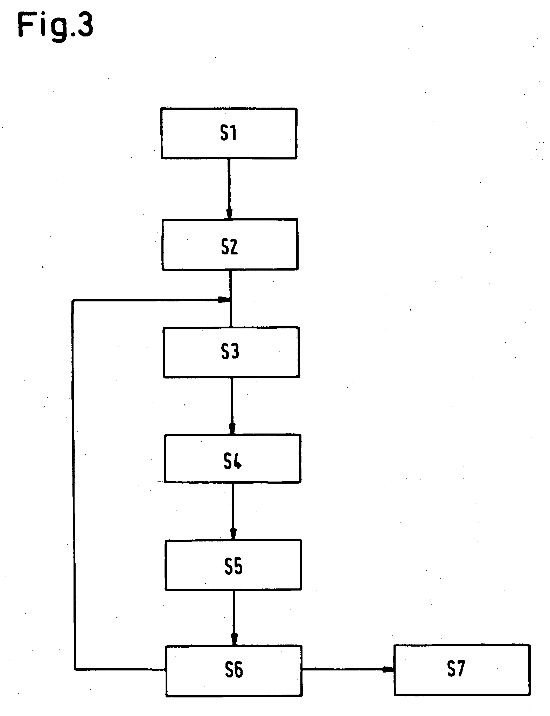

Es soll nun eine besonders bevorzugte Ausführungsform des erfindungsgemäßen Verfahrens beschrieben werden. Dabei wird auf Fig. 3 Bezug genommen.

In Schritt S1 werden Sollzustand-Informationen über einen Sollzustand des Prüfobjekts (z. B. CAD-Daten) verwendet, um Prüforte auf erwarteten Materialgrenzflächen des Prüfobjekts festzulegen.

Im folgenden Schritt S2 wird für jeden Prüfort als Auswertungslinie die entsprechende Grenzflächennormale, d. h. eine senkrecht zu der Grenzfläche verlaufende Linie (oder deren Richtung) bestimmt, die die Grenzfläche an dem jeweiligen Prüfort durchstößt.

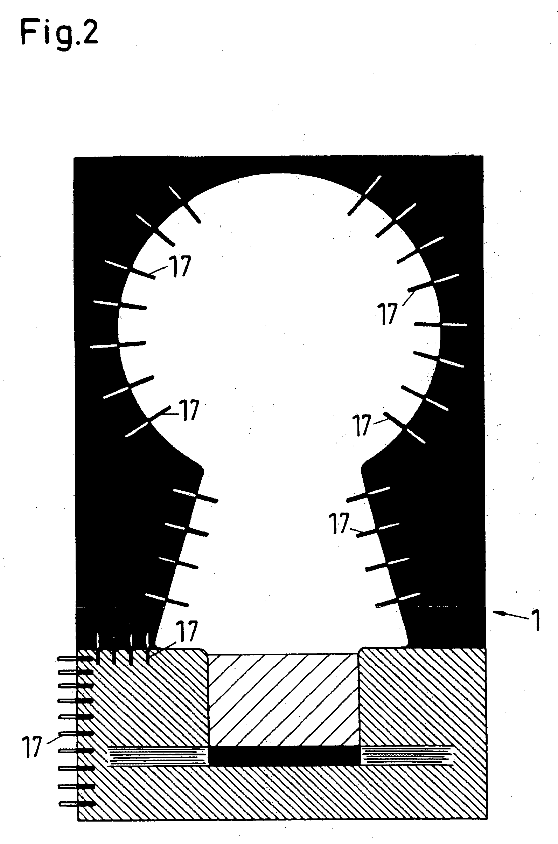

Das Ergebnis der Schritte S1 und S2 ist in Fig. 2 schematisch dargestellt. Erkennbar ist eine Mehrzahl von Auswertungslinien, von denen einige mit dem Bezugszeichen 17 bezeichnet sind. Entlang der Auswertungslinien findet die im Folgenden beschriebene erfindungsgemäße Bestimmung von jeweils einem Ort einer Materialgrenze statt.

Die Schritte S1 und S2 können für einen bestimmten Objekttyp lediglich ein einziges Mal durchgeführt werden. Damit steht für jedes Prüfobjekt, das gemäß dem Objekttyp hergestellt und überprüft werden soll, ein Satz von Prüforten mit jeweils einer zugehörigen Auswertungslinie zur Verfügung. Die folgenden Schritte können daher beliebig oft, jeweils für ein Prüfobjekt, wiederholt werden. Dies ist in Fig. 3 durch eine entsprechende Schleife dargestellt.

In Schritt S3 werden dreidimensionale Bilddaten eines Prüfobjekts, z. B. des Prüfobjekts 1 aus Fig. 1, und die Sollzustand-Informationen über den Sollzustand des Prüfobjekts registriert, d. h. ihre Koordinatensysteme miteinander in Bezug gesetzt. Im Ergebnis lassen sich nun Bildpunkte und Richtungen der dreidimensionalen Bilddaten auffinden und/oder definieren, die den festgelegten Prüforten und Auswertungslinien entsprechen. Dabei kommt es lediglich auf die richtige Lage und Orientierung der Auswertungslinien an. Die Prüforte müssen dagegen nicht zwangsläufig in den dreidimensionalen Bilddatensatz übertragen werden.

Zur Registrierung können insbesondere charakteristische Formmerkmale des Prüfobjekts als Marker verwendet werden. Auch ist es bei Vorliegen von dreidimensionalen Sollzustand-Daten (etwa CAD-Planungsdaten des Prüfobjekts) möglich, gemäß der Methode der Maximierung der gegenseitigen Bildinformation der Sollzustand-Daten und der dreidimensionalen Bilddaten eine Registrierung durchzuführen. Ein geeignetes Registrierungsverfahren ist z. B. auch aus US 6,125,164 bekannt. Dort wird das Verfahren dazu eingesetzt, einen Patienten bei der Strahlungsbehandlung bezüglich dreidimensionaler CT-Daten zu registrieren. Dabei werden digital rekonstruierte Radiograph-Bilder (so genannte DRR) aus den CT-Daten erzeugt und mit einem Bild der aktuellen Position und Ausrichtung des Patienten verglichen. Insbesondere können daraus Informationen über eine Abweichung der momentanen Position und Ausrichtung des Patienten abgeleitet werden. Das in der US 6,125,164 beschriebene Verfahren wird hiermit vollinhaltlich durch Referenzierung in die vorliegende Beschreibung aufgenommen. Dabei entsprechen den CT-Daten die dreidimensionalen Bilddaten und entsprechen der aktuellen Position und Ausrichtung des Patienten die Sollzustand-Informationen des Prüfobjekts. Im Ergebnis kann die Lage- und Ausrichtungsdifferenz zwischen den beiden Datensätzen minimiert werden, sodass eine Registrierung stattfindet.

Der Schritt S3 und die folgenden Schritte können auch einzeln für jede Auswertungslinie durchgeführt werden.

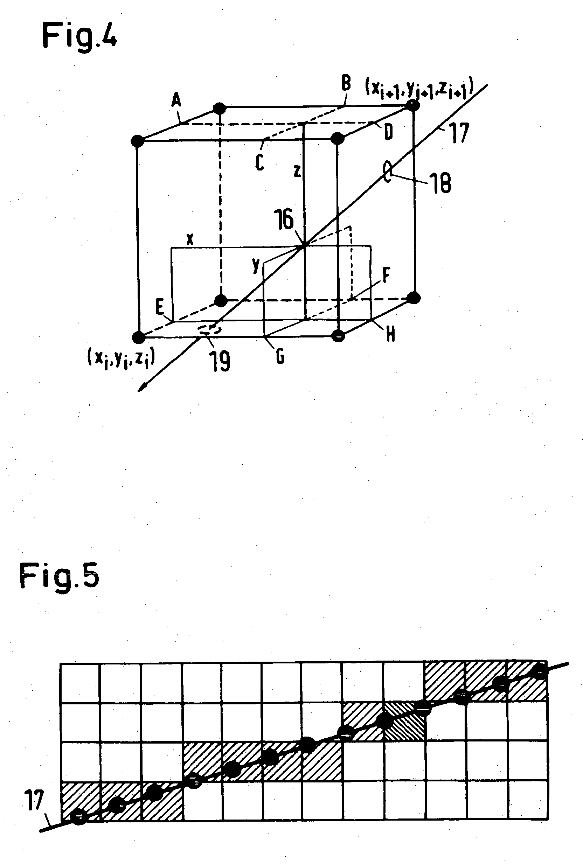

In Schritt S4 werden nun für die Auswertungslinie oder für jede Auswertungslinie die Bildwerte ermittelt, die entlang der Auswertungslinie liegen. Dabei wird in einem konkreten Beispiel, das anhand von Fig. 4 und Fig. 5 näher erläutert wird, von dreidimensionalen Bilddaten ausgegangen, die in Voxel aufgelöst vorliegen.

Fig. 4 zeigt eine Volumeneinheit, nämlich einen Würfel, der dreidimensionalen Bilddaten. Jeder der Eckpunkte des Würfels definiert einen Ort in dem Koordinatensystem der dreidimensionalen Bilddaten, dem ein Bildwert zugeordnet ist. Die Darstellung kann auch so interpretiert werden, dass jeder der Eckpunkte des Würfels den Mittelpunkt eines Voxels der dreidimensionalen Bilddaten darstellt. Die Auswertungslinie ist wiederum mit dem Bezugszeichen 17 bezeichnet und verläuft in Fig. 4 von rechts oben nach links unten, wobei sie gemäß der dreidimensionalen Darstellung außerdem von hinten oben nach vorne unten verläuft. Dies ist durch die Durchstoßpunkte 18 (in der rechten Seitenfläche der Volumeneinheit) und 19 (im Boden der Volumeneinheit) angedeutet. Für äquidistante Punkte auf der Auswertungslinie 17 sollen für die Ermittlung des Ortes der Materialgrenze Werte ermittelt werden, die durch Gewichtung aus den entlang der Auswertungslinie 17 liegenden Bildwerten bestimmt werden. In die dargestellte Volumeneinheit fällt einer dieser Punkte, nämlich der Punkt 16. Für einen zweidimensionalen Fall ist in Fig. 5 das Prinzip der äquidistanten Punkte (durch schwarze Kreise dargestellt) auf der Auswertungslinie 17 dargestellt. Dabei kann es insbesondere vorkommen, dass mehr als einer der Punkte in eine Volumeneinheit (in Fig. 5 durch Quadrate dargestellt) fällt. In anderen Fällen muss nicht in jede Volumeneinheit ein Punkt fallen. Dadurch wird jedoch vorhandene Information nicht genutzt. Vorzugsweise beträgt der Abstand zwischen den Punkten auf der Auswertungslinie 17 daher eine Längeneinheit der dreidimensionalen Bilddaten (z.B. gleich der Kantenlänge des Würfels).

Der Bildwert des Punktes 16 in Fig. 4 (und entsprechend für alle weiteren Punkte auf die Auswertungslinie 17) wird vorzugsweise durch trilineare (bezüglich der drei Koordinatenachsen) Interpolation der Bildwerte an den Eckpunkten des Würfels ermittelt, z. B. gemäß dem folgenden Verfahren ermittelt: Zunächst wird der Punkt 16 senkrecht auf acht Stück der Kanten des Würfels projiziert. Dabei bilden jeweils vier der Kanten eine Seitenfläche des Würfels. Die beiden von den jeweils vier Kanten umrandeten Seitenflächen liegen einander gegenüber. Für die entsprechenden projizierten Punkte A bis H (siehe Fig. 4) wird jeweils der linear interpolierte Bildwerte der Bildwerte an den beiden Eckpunkten der Kante ermittelt, gemäß der Gleichung:

$$W_{int} = W_{e1} * a + W_{e2} * (1 - a),$$

wobei $W_{int}$ der interpolierte Bildwerte an dem projizierten Punkt ist, wobei $W_{e1}$ der Bildwert des einen Eckpunktes ist und wobei $W_{e2}$ der Bildwert des zweiten Eckpunktes ist. In entsprechender Weise kann weiter interpoliert werden, wobei nun Bildwerte für sechs Punkte interpoliert werden, die durch senkrechte Projektion des Punktes 16 auf die Seitenflächen des Würfels erhalten werden. Anschließend können weitere drei Interpolationen für Punktepaare auf jeweils einander gegenüberliegenden Seitenflächen durchgeführt werden und so der Bildwert des Punktes 16 ermittelt werden. Z. B. wird die Summe der drei Interpolationen gebildet und als trilinear interpolierter Bildwert verwendet.

Dieses und andere Verfahren mit Gewichtung verschiedener entlang der Auswertungslinie liegender Bildwerte berücksichtigen den Abstand der Bildwerte zur Auswertungslinie und führen daher zu genaueren Ergebnissen bei der Bestimmung des Ortes der Materialgrenze auf der Auswertungslinie.

Als Ergebnis von Schritt S4 (unabhängig davon, ob eine Gewichtung durchgeführt wird oder nicht) erhält man Bildwerte, die lediglich von einer örtlichen Dimension abhängen. Dabei wird vorzugsweise die zuvor beschriebene Gewichtung durchgeführt. Es kann aber auch anders vorgegangen werden. Beispielsweise kann jeweils lediglich der Bildwert des Eckpunktes übernommen, der dem Punkt auf der Auswertungslinie am nächsten liegt.

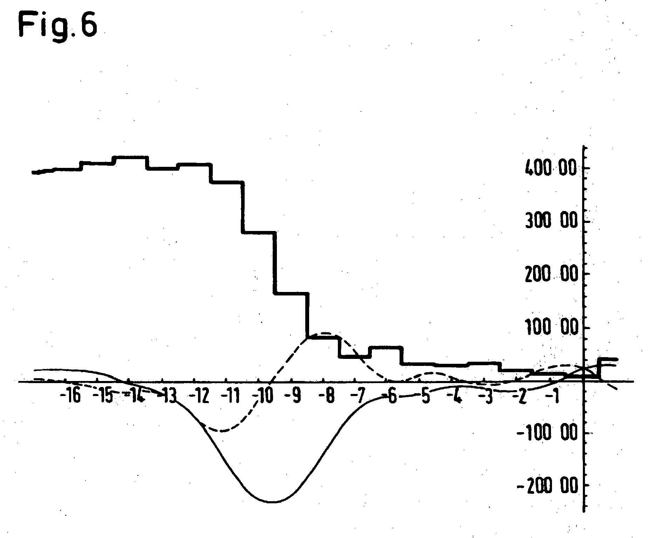

In Schritt S5 wird nun der Ort der Materialgrenze auf der Auswertungslinie bestimmt. Hierzu kann optional eine Glättung von Unterschieden der Bildwerte (Filterung, beispielsweise mit einem Gaußschen Filter) durchgeführt werden. Fig. 6 zeigt als Beispiel für die aus den vorangegangenen Schritten erhalten Information ein Diagramm, in dem Bildwerte (y-Achse, Werte im Bereich von ca. 0 bis 10000 in beliebigen Einheiten) über der durch die Auswertungslinie definierten Koordinatenachse (x-Achse) aufgetragen sind. Die Bildwerte sind dabei eine Funktion der Ordnungszahlen (hier dargestellt von ca. -17 bis +1) der Punkte auf der Auswertungslinie. In der Darstellung ist die Funktion eine Stufenfunktion, wobei jedes Stufenniveau einem Bildwerte entspricht.

Außerdem sind in Fig. 6 die erste partielle Ableitung (ununterbrochene Linie) und die zweite partielle Ableitung (gestrichelte Linie) der Bildwerte in Richtung der Auswertungslinie dargestellt, die z. B. nach linearer Interpolation der Stufenfunktion gebildet wurden. Etwa an der Stelle -9,6, d. h. zwischen den Punkten mit den Ordnungszahlen -9 und -10 liegt eine Nullstelle der zweiten partiellen Ableitung. Dies ist einem Betrags-Maximum der ersten partiellen Ableitung äquivalent. Der dieser Stelle entsprechende Ort auf der Auswertungslinie wird als Ort der Materialgrenze bestimmt.

In dem optionalen Schritt S6 erfolgt eine Berechnung des Abstandes zwischen dem bestimmten Ort der Materialgrenze und dem aus den Sollwert-Informationen ermittelten Prüfort. Bei einem Abstand über einem vorgegebenen Schwellwert kann eine Fehlermeldung ausgegeben werden (Schritt S7).

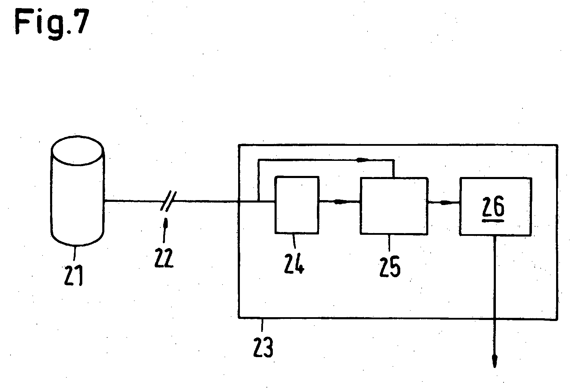

Fig. 7 zeigt eine Vorrichtung zur Bestimmung von Materialgrenzen eines Prüfobjekts, die insbesondere ausgestaltet sein kann, die zuvor beschriebene besonders bevorzugte Ausführungsform des Verfahrens auszuführen.

Dreidimensionale Bilddaten und Sollzustand-Informationen des Prüfobjekts sind in einem Permanent-Datenspeicher 21 gespeichert. Eine Vorrichtung 23 zur Bestimmung von Materialgrenzen ist über eine Schnittstelle 22 mit dem Datenspeicher 21 verbunden. Die Vorrichtung 23 weist eine Festlegungseinrichtung 24 auf, die über die Schnittstelle 22 Sollzustand-Informationen aus dem Datenspeicher 21 abrufen und/oder (z. B. in einen Arbeitsspeicher, nicht dargestellt) laden kann.

Eine Auswertungseinrichtung 25 ist mit der Schnittstelle 22 und der Festlegungseinrichtung 24 verbunden. Sie ist ausgestaltet, den Ort der Materialgrenze auf der durch die Festlegungseinrichtung 24 vorgegebenen Auswertungslinie zu bestimmen (z. B. gemäß den oben beschriebenen Schritten S3 bis S6).

Alternativ können die Ergebnisse der Festlegungseinrichtung 24 wieder in dem Datenspeicher 21 abgespeichert werden, sodass eine Verbindung zwischen der Festlegungseinrichtung 24 und der Auswertungseinrichtung 25 nicht zwingend erforderlich ist.

Eine Fehler-Bestimmungseinrichtung 26 ist mit der Auswertungseinrichtung 25 verbunden und ist ausgestaltet, aus den Ergebnissen der Auswertungseinrichtung einen etwaig bestehenden Fehler in der Position des Ortes der Materialgrenze zu ermitteln und auszugeben. Alternativ oder zusätzlich ist die Bestimmungseinrichtung 26 ausgestaltet, das oben beschriebene Verfahren auszuführen, bei dem eine Mehrzahl weiterer Orte an einer Grenzfläche derselben Materialgrenze bestimmt werden, wobei ermittelt wird, ob die Auswertungslinie an dem ersten Ort senkrecht zu der durch zumindest die weiteren Orte definierten Grenzfläche verläuft, und/oder ein Maß der Abweichung der Auswertungslinie von der Senkrechten ermittelt wird.

## Patentansprüche

1. Verfahren zum Bestimmen von Materialgrenzen eines Prüföbjekts (1), wobei

   - dreidimensionale Bilddaten des Prüfobjekts (1) erzeugt werden oder dreidimensionale Bilddaten des Prüfobjekts (1) vorliegen, wobei Bildwerte der Bilddaten mittels invasiver Strahlung gewonnen werden oder wurden,
   - aus CAD (Computer Aided Design) - Daten des Prüfobjekts (1), die Informationen über einen Sollzustand des Prüfobjekts (1) sind, ein Punkt auf einer erwarteten Grenzfläche des Materials ermittelt wird und eine Auswertungslinie (17) zur Auswertung der Bilddaten relativ zu dem Prüfobjekt (1) festgelegt wird, wobei die Auswertungslinie (17) derart festgelegt, dass sie durch den Punkt auf der erwarteten Grenzfläche des Materials verläuft und eine Richtung aufweist, die an dem Punkt senkrecht zu der erwarteten Grenzfläche steht,
   - die dreidimensionalen Bilddaten des Prüfobjekts (1) und die CAD - Daten registriert werden, d. h. ihre Koordinatensysteme miteinander in Bezug gesetzt werden, und
   - durch Auswertung von Bildwerten, die entlang der Auswertungslinie liegen, in den dreidimensionalen Bilddaten ein Ort einer Materialgrenze des Prüfobjekts (1) bestimmt wird, sodass der Betrag der ersten partiellen Ableitung der Bildwerte in Richtung der Auswertungslinie (17) an dem Ort der Materialgrenze ein lokales Maximum aufweist.

2. Verfahren nach dem vorhergehenden Anspruch, wobei bei der Gewinnung der Bildwerte Unterschiede zwischen örtlich benachbarten Bildwerten teilweise ausgeglichen werden, insbesondere durch digitale Filterung.

3. Verfahren nach einem der vorhergehenden Ansprüche, wobei Unterschiede örtlich benachbarter Bildwerte, die entlang der Auswertungslinie (17) liegen, und/oder Unterschiede von Werten, die aus den entlang der Auswertungslinie (17) liegenden Bildwerten abgeleitet werden, vor oder bei der Bestimmung des Ortes der Materialgrenze teilweise ausgeglichen werden, insbesondere durch digitale Filterung.

4. Verfahren nach einem der vorhergehenden Ansprüche, wobei bei der Auswertung der Bildwerte, die entlang der Auswertungslinie (17) liegen, eine Gewichtung von Bildwerten In Abhängigkeit von einem Abstand der Bildwerte zu der Auswertungslinie (17) durchgeführt wird.

5. Verfahren nach einem der vorhergehenden Ansprüche, wobei ein Ort nur dann als Ort einer Materialgrenze erkannt wird, wenn der Betrag der ersten partiellen Ableitung der Bildwerte in Richtung der Auswertungslinie (17) einen festgelegten Grenzwert überschreitet oder größer oder gleich dem Grenzwert ist.

6. Verfahren, wobei zumindest ein erster Ort der Materialgrenze gemäß dem Verfahren nach einem der vorhergehenden Ansprüche bestimmt wird, wobei eine Mehrzahl weiterer Orte an einer Grenzfläche derselben Materialgrenze bestimmt wird, wobei ermittelt wird, ob die Auswertungslinie (17) an dem ersten Ort senkrecht zu der durch zumindest die weiteren Orte definierten Grenzfläche verläuft, und/oder ein Maß der Abweichung der Auswertungslinie (17) von der Senkrechten ermittelt wird.

7. Computerprogramm mit Programmcode-Mitteln, die ausgestaltet sind ein Verfahren gemäß einem der vorhergehenden Ansprüche durchzuführen, wenn das Computerprogramm auf einem Computer oder Computer-Netzwerk ausgeführt wird.

8. Computerprogramm mit Programmcode-Mitteln gemäß dem vorhergehenden Anspruch, die auf einem computerlesbaren Datenträger gespeichert sind.

9. Vorrichtung (22,23) zum Bestimmen von Materialgrenzen eines Prüfobjekts (1), aufweisend:

- eine Schnittstelle (22) zum Empfangen von dreidimensionalen Bilddaten des Prüfobjekts (1), wobei Bildwerte der Bilddaten mittels invasiver Strahlung gewonnen wurden,
- eine Festlegungseinrichtung (24) zur Festlegung einer Auswertungslinie (17) relativ zu dem Prüfobjekt, wobei die Festlegungseinrichtung (24) die Auswertungslinie (17) derart festgelegt, dass sie durch einen Punkt auf einer erwarteten Grenzfläche des Materials verläuft und eine Richtung aufweist, die an dem Punkt senkrecht zu der erwarteten Grenzfläche steht, wobei die Festlegungseinrichtung (24) den Punkt und die erwartete Grenzfläche aus CAD (Computer Aided Design) - Daten des Prüfobjekts (1), die Informationen über einen Sollzustand des Prüfobjekts (1) sind ermittelt,
- wobei die Vorrichtung ausgestaltet ist, die dreidimensionalen Bilddaten des Prüfobjekts (1) und die CAD - Daten zu registrieren, d. h. ihre Koordinatensysteme miteinander in Bezug zu setzen, und
- eine Auswertungseinrichtung (25), die mit der Schnittstelle (22) und der Festlegungseinrichtung (24) verbunden ist, wobei die Auswertungseinrichtung (25) ausgestaltet ist, durch Auswertung von Bildwerten, die entlang der Auswertungslinie (17) liegen, einen Ort einer Materialgrenze des Prüfobjekts (1) zu bestimmen, sodass der Betrag der ersten partiellen Ableitung der Bildwerte in Richtung der Auswertungslinie (17) an dem Ort der Materialgrenze ein lokales Maximum aufweist.

## Claims

1. Method for determining material boundaries of a test object (1), wherein

- three-dimensional image data of the test object (1) are generated or three-dimensional image data of the test object (1) are available, wherein image values of the image data are or were obtained by means of invasive radiation,
- a point on an expected interface of the material is established from CAD (computer-aided design) data of the test object (1), which represent information about an intended state of the test object (1), and an evaluation line (17) for evaluating the image data relative to the test object (1) is set, wherein the evaluation line (17) is set in such a way that it extends through the point on the expected interface of the material and it has a direction which is perpendicular to the expected interface at said point,
- the three-dimensional image data of the test object (1) and the CAD data are registered, i.e. the coordinate systems thereof are related to one another, and
- a location of a material boundary of the test object (1) is determined by evaluating image values, which lie along the evaluation lines, in the three-dimensional image data such that the magnitude of the first partial derivative of the image values in the direction of the evaluation line (17) has a local maximum at the location of the material boundary.

2. Method according to the preceding claim, wherein differences between spatially adjacent image values are partly equalized, in particular by digital filtering, when obtaining the image values.

3. Method according to one of the preceding claims, wherein differences between spatially adjacent image values which lie along the evaluation line (17) and/or differences between values which are derived from the image values lying along the evaluation line (17) are partly equalized, in particular by digital filtering, prior to, or during, the determination of the location of the material boundary.

4. Method according to one of the preceding claims, wherein a weighting of image values is performed in a manner dependent on a distance of the image values from the evaluation line (17) when evaluating the image values that lie along the evaluation line (17).

5. Method according to one of the preceding claims, wherein a location is only identified as a location of a material boundary if the magnitude of the first partial derivative of the image values in the direction of the evaluation line (17) exceeds a predetermined threshold or is greater than or equal to the threshold.

6. Method, wherein at least a first location of the material boundary is determined in accordance with the method according to one of the preceding claims, wherein a plurality of further locations are determined at an interface of the same material boundary, wherein it is established as to whether the evaluation line (17) at the first location extends perpendicular to the interface defined by at least the further locations and/or a measure of the deviation of the evaluation line (17) from the perpendicular is established.

7. Computer program with program code means which are configured to implement a method according to one of the preceding claims when the computer program is executed on a computer or computer network.

8. Computer program with program code means according to the preceding claim, which are stored on a computer readable data medium.

9. Apparatus (22, 23) for determining material boundaries of a test object (1), comprising:

- an interface (22) for receiving three-dimensional image data of the test object (1), wherein image values of the image data were obtained by means of invasive radiation,
- a setting device (24) for setting an evaluation line (17) relative to the test object, wherein the setting device (24) sets the evaluation line (17) in such a way that it extends through a point on the expected interface of the material and it has a direction which is perpendicular to the expected interface at said point, wherein the setting device (24) establishes the point and the expected interface from CAD (computer-aided design) data of the test object (1), which represent information about an intended state of the test object (1),
- wherein the device is configured to register the three-dimensional image data of the test object (1) and the CAD data, i.e. relate the coordinate systems to one another, and
- an evaluation device (25), which is connected to the interface (22) and the setting device (24), wherein the evaluation device (25) is configured to determine a location of a material boundary of the test object (1) by evaluating image values, which lie along the evaluation line(17), such that the magnitude of the first partial derivative of the image values in the direction of the evaluation line (17) has a local maximum at the location of the material boundary.

**Revendications**

1. Procédé pour déterminer des délimitations de matériau d'un objet à tester (1), dans lequel

- des données d'images tridimensionnelles de l'objet à tester (1) sont générées ou des données d'images tridimensionnelles de l'objet à tester (1) sont présentes, dans lequel des valeurs d'images des données d'images sont ou ont été obtenues au moyen d'un rayonnement invasif,
- à partir de données de CAD (Computer Aided Design - Conception Assistée par Ordinateur) de l'objet à tester (1), qui sont des informations concernant l'état nominal de l'objet à tester (1), un point sur la surface de délimitation attendue du matériau est déterminé et une courbe d'évaluation (17) est établie pour évaluer les données d'images par rapport à l'objet à tester (1), dans lequel la courbe d'évaluation (17) est établie de manière à ce qu'elle passe par le point sur la surface de délimitation attendue du matériau et présente une direction qui est perpendiculaire à la surface de délimitation attendue en ledit point,
- les données d'images tridimensionnelles de l'objet à tester (1) et les données de CAD sont alignées, c'est-à-dire que leurs systèmes de coordonnées sont définis les uns par rapport aux autres, et
- un emplacement d'une délimitation de l'objet à tester (1) est déterminé par évaluation de valeurs d'images qui se situent le long de la courbe d'évaluation dans les données d'images tridimensionnelles de manière à ce que la valeur de la dérivée première partielle des valeurs d'images dans la direction de la courbe d'évaluation (17) présente un maximum local à l'emplacement de la délimitation de matériau.

2. Procédé selon la revendication précédente, dans lequel, lors de l'obtention des données d'images, les différences entre des valeurs d'images spatialement adjacentes sont partiellement compensées, notamment par filtrage numérique.

3. Procédé selon l'une quelconque des revendications précédentes, dans lequel des différences de valeurs d'images spatialement adjacentes qui se situent le long de la courbe d'évaluation (17) et/ou des différences de valeurs qui ont été dérivées à partir des valeurs d'images se situant le long de la courbe d'évaluations (17) sont partiellement compensées avant ou lors de la détermination de l'emplacement de la délimitation de matériau, notamment par filtrage numérique.

4. Procédé selon l'une quelconque des revendications précédentes, dans lequel, lors de l'évaluation des valeurs d'images qui se situent le long de la courbe d'évaluation (17), une pondération de valeurs d'images est effectuée en fonction d'une distance des valeurs d'images à la courbe d'évaluation (17).

5. Procédé selon l'une quelconque des revendications précédentes, dans lequel un emplacement n'est détecté en tant qu'emplacement d'une délimitation de matériau que lorsque la valeur de la dérivée première partielle des valeurs d'images dans la direction de la courbe d'évaluation (17) dépasse une valeur limite fixe ou est supérieure ou égale à la valeur limite.

6. Procédé dans lequel au moins un premier emplacement de la délimitation de matériau est déterminé conformément au procédé selon l'une quelconque des revendications précédentes, dans lequel une pluralité d'autres emplacements est déterminée sur une surface de délimitation de la même délimitation de matériau, dans lequel il est déterminé si la courbe d'évaluation (17) audit premier emplacement s'étend perpendiculairement à la surface de délimitation définie par au moins ledit autre emplacement et/ou dans lequel une mesure de l'écart de la courbe d'évaluation (17) par rapport à la verticale est déterminée.

7. Programme informatique comprenant des moyens à code de programme qui sont conçus pour mettre en oeuvre le procédé selon l'une quelconque des revendications précédentes lorsque le programme informatique est exécuté sur un ordinateur ou un réseau d'ordinateurs.

8. Programme informatique comprenant des moyens à code de programme selon la revendication précédente, qui sont stockés sur un support de données lisible par ordinateur.

9. Dispositif (22, 23) destiné à déterminer des délimitations de matériau d'un objet à tester (1), comprenant :

- une interface (22) destinée à recevoir des données d'images tridimensionnelles de l'objet à tester (1), dans lequel des valeurs d'images des données d'images sont obtenues au moyen d'un rayonnement invasif,
- un dispositif d'établissement (24) destiné à établir une courbe d'évaluation (17) par rapport à l'objet à tester, dans lequel le dispositif d'établissement (24) établit ladite courbe d'évaluation (17) de manière à ce qu'elle passe par un point sur une surface de délimitation attendue du matériau et présente une direction qui est perpendiculaire à la surface de délimitation attendue en ledit point, dans lequel le dispositif d'établissement (24) détermine le point et la surface de délimitation attendue à partir de données de CAD (Computer Aided Design) de l'objet à tester (1), qui sont des informations concernant un état nominal de l'objet à tester (1),
- dans lequel le dispositif est conçu pour enregistrer les données d'images tridimensionnelles de l'objet à tester (1) et les données de CAD, c'est-à-dire pour définir leurs systèmes de coordonnées les uns par rapport aux autres, et
- un dispositif d'évaluation (25) qui est connecté à l'interface (22) et au dispositif d'établissement (24), dans lequel le dispositif d'évaluation (25) est conçu pour déterminer, par évaluation de données d'images qui se situent le long de la courbe d'évaluation (17), un emplacement d'une délimitation de matériau de l'objet à tester (1) de manière à ce que la valeur de la dérivée première partielle des valeurs d'images dans la direction de la courbe d'évaluation (17) présente un maximum local audit emplacement de la délimitation de matériau.

## Fig.1

## Fig.2

# Fig.3

```
        ┌─────────────┐
        │     S1      │
        └──────┬──────┘
               │
               ▼
        ┌─────────────┐
        │     S2      │
        └──────┬──────┘
               │
    ┌──────────┤
    │          ▼
    │   ┌─────────────┐
    │   │     S3      │
    │   └──────┬──────┘
    │          │
    │          ▼
    │   ┌─────────────┐
    │   │     S4      │
    │   └──────┬──────┘
    │          │
    │          ▼
    │   ┌─────────────┐
    │   │     S5      │
    │   └──────┬──────┘
    │          │
    │          ▼
    │   ┌─────────────┐      ┌─────────────┐
    └───┤     S6      ├─────▶│     S7      │
        └─────────────┘      └─────────────┘
```

# Fig.4

# Fig.5

Fig.6

# Fig.7

**IN DER BESCHREIBUNG AUFGEFÜHRTE DOKUMENTE**

**In der Beschreibung aufgeführte Patentdokumente**

- DE 10245116 A1
- DE 10248770 A1
- US 20010055016 A1
- US 6631364 B1
- US 6125164 A